Europäisches Patentamt

European Patent Office

Office européen des brevets

(19)

(11) Veröffentlichungsnummer: **0 024 285**
**A1**

(12) # EUROPÄISCHE PATENTANMELDUNG

(21) Anmeldenummer: **80103418.2**

(22) Anmeldetag: **19.06.80**

(51) Int. Cl.³: **F 17 D 3/00**

(30) Priorität: **22.08.79 DE 2933939**

(43) Veröffentlichungstag der Anmeldung: **04.03.81**
**Patentblatt 81/9**

(84) Benannte Vertragsstaaten: **BE CH DE FR LI NL**

(71) Anmelder: **Schulz, Wilhelm, Kuhleshütte 85,**
**D-4150 Krefeld (DE)**

(72) Erfinder: **Kirchkamp, Josef, Roonstrasse 9,**
**D-4150 Krefeld (DE)**

(74) Vertreter: **Cohausz, Werner, Dipl.-Ing. et al,**
**Schumannstrasse 97, D-4000 Düsseldorf (DE)**

(54) **Schauglas-Armatur.**

(57) Die Armatur besteht aus einem Rohrleitungsabschnitt (1) mit je einer Öffnung (4, 5) an diametral gegenüberliegenden Seiten eines Mantels, die mit durchsichtigen Scheiben (10, 11) dichtend abgedeckt werden. Aus dem Rohrmantel sind im Bereich um die Öffnungen (4, 5) in diesem durch Pressen ausgeformte plane Auflageflächen (6, 7) für die Scheiben (10, 11), wobei die planen Auflageflächen (6, 7) möglichst nahe an oder in der Tangentialebene des Rohrmantels liegen sollen.

0024285

Zylindermantels Rohrstutzen mit Flanschen ebenfalls einstückig angeformt oder angeschweißt. Die erstgenannten Flansche dienen dem Einbau der Schauglas-Armatur in die Rohrleitung und die letztgenannten Flansche der Befestigung der
durchsichtigen Scheiben, die mit Hilfe eines Flanschrings
unter Zwischenlegen von Dichtringen befestigt werden.

Die Herstellung der bekannten Schauglas-Armaturen im Formgußverfahren ist verhältnismäßig teuer, weil für jede Dimension ein eigenes Modell angefertigt werden und der Abguß
einzeln erfolgen muß. Da es sich auch immer wieder um andere
Werkstoffe handelt, aus denen die Schauglas-Armaturen bestehen müssen, nämlich einem gleichartigen Werkstoff wie die
Rohrleitung, in die sie eingebaut werden soll, ist eine verhältnismäßig teure Einzelfertigung erforderlich. Da die Wandstärke der Gußerzeugnisse außerdem verhältnismäßig groß ist,
ist ein hoher Materialeinsatz erforderlich. Hinzu kommt noch,
daß die Rohrstutzen, an die die durchsichtigen Scheiben angeflanscht  sind, Toträume bilden, in denen sich Verschmutzungen ablagern, so daß die Sicht durch das Schauglas mit
der Zeit beeinträchtigt wird.

Aufgabe der vorliegenden Erfindung ist nun eine einfachere,
preiswertere und damit wirtschaftlichere Fertigung solcher
Schauglas-Armaturen und die Vermeidung von Toträumen in den-

Wilhelm Schulz

Kuhleshütte 85

4150 Krefeld

Schauglas-Armatur

Die Erfindung betrifft eine Schauglas-Armatur, bestehend aus einem Rohrleitungsabschnitt, dessen an diametral gegenüberliegenden Seiten seines Mantels vorgesehene Öffnungen durch angeflanschte durchsichtige Scheiben dichtend abgedeckt werden.

Schauglas-Armaturen, die vor oder nach Absperr-Armaturen in Rohrleitungen oder an Behältern eingebaut sind, dienen der Beobachtung des strömenden Mediums hinsichtlich Farbe, Konsistenz oder Verschmutzungsgrad. Bekannte Schauglas-Armaturen werden durch Formguß hergestellt und weisen einen rohrförmigen Teil auf, an dessen gegenüberliegende offene Enden Befestigungsflansche einstückig angeformt oder angeschweißt sind. Im Mittelabschnitt sind an diametral gegenüberliegenden Seiten des

0024285

selben, damit die Sicht durch das Schauglas auch bei längerem
Gebrauch nicht durch abgelagerte Verschmutzungen beeinträchtigt
wird.

Zur Lösung dieser Aufgabe wir bei einer Schauglas-Armatur der
eingangs genannten Art erfindungsgemäß vorgeschlagen, daß der
Rohrmantel im Bereich um die Öffnungen einstückige angeformte
plane Auflageflächen für die Scheiben aufweist.

Dadurch wird es möglich, einen Abschnitt der Rohrleitung, in
die die Schauglas-Armatur eingebaut werden soll, zur Herstellung derselben zu verwenden. Dieser Abschnitt besteht
dann aus dem gleichen Material wie die Rohrleitung. Er hat
eine geringere Wandstärke als ein Formgußerzeugnis, erfordert
somit weniger Material und ist schon deshalb preiswerter. Die
Ausbildung der Auflageflächen für die durchsichtigen Scheiben
der Schauglas-Armatur, die im Bereich der an diametral gegenüberliegenden Seiten des Rohrmantels vorgesehene Öffnungen,
die durch die Scheiben dichtend abgedeckt werden sollen, kann
außerdem in fertigungstechnisch sehr einfacher Weise durch
Andrücken erfolgen, was die Fertigungskosten vermindert. Die
Auflageflächen können dabei entweder aus dem Rohrmantel heraus-
oder in den Rohrmantel eingedrückt werden. Rohrstutzen entfallen dabei, so daß praktisch keine Toträume entstehen, in
denen sich Schmutzablagerungen ansammeln können, welche die
Scheiben der Schauglas-Armatur trüben könnten.

0024285

Gemäß einer vorteilhaften Ausgestaltung der erfindungsgemäßen Schauglas-Armatur sollen die planen Auflageflächen für die Scheiben, möglichst nahe an oder in der Tangentialebene des Rohrmantels liegend, angedrückt werden. Dies reduziert einmal den Außenumfang der Schauglas-Armatur und verhindert die Entstehung von Toträumen.

Die die Öffnungen überdeckenden durchsichtigen Scheiben werden einfach unter Zwischenlegen einer Dichtung an den planen Auflageflächen angeflanscht.

Ausführungsbeispiele der erfindungsgemäßen Schauglas-Armatur sind in der Zeichnung dargestellt.

Fig. 1     zeigt einen Längsschnitt durch ein Ausführungsbeispiel,

Fig. 2     eine Draufsicht und

Fig. 3     einen Querschnitt desselben Ausführungsbeispiels,

Fig. 4     ist ein teilweiser Längsschnitt durch ein weiteres Ausführungsbeispiel einer erfindungsgemäßen Schauglas-Armatur.

0024285

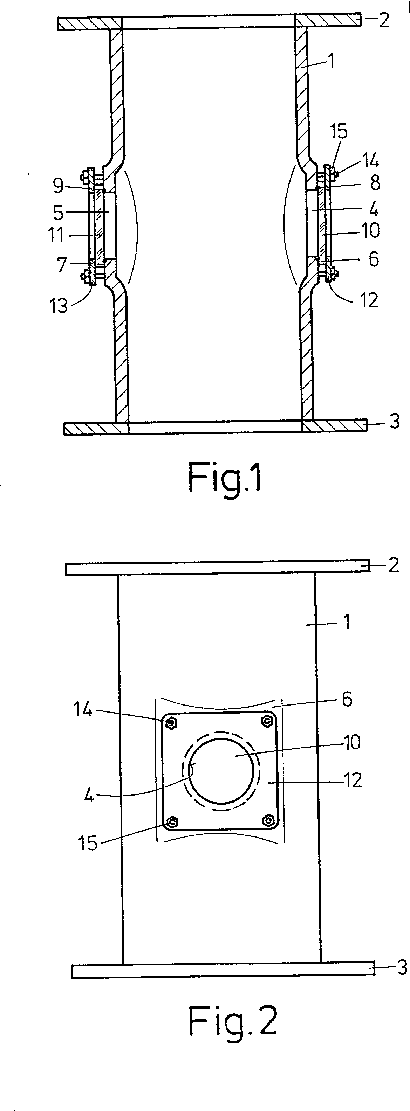

Das in den Figuren 1 bis 3 dargestellte Ausführungsbeispiel der erfindungsgemäßen Schauglas-Armatur besteht aus dem Rohrabschnitt 1, an dessen gegenüberliegende öffene Enden Flansche 2, 3 an- oder aufgeschweißt sind. Sie dienen der Befestigung der Schauglas-Armatur in einer nicht dargestellten Rohrleitung oder dem Anbau vor oder hinter einer Absperr-Armatur oder an einem Behälter.

Im Mittelteil des Rohrleitungsabschnitts 1 sind an diametral gegenüberliegenden Seiten Öffnungen 4 und 5 vorgesehen, die einen Durchblick durch den Rohrleitungsabschnitt 1 gestatten. Um die Öffnungen 4, 5 sind in erfindungsgemäßer Weise plane Flächen 6, 7 angedrückt, die etwa in der Tangentialebene des Rohrleitungsabschnitts 1 liegen und damit praktisch keine Toträume für die Ablagerung von Schmutz bilden. Auf die Auflageflächen 6, 7 sind unter Zwischenlegen von Dichtungs- ringen 8, 9 die Öffnungen 4, 5 überdeckende durchsichtige Scheiben 10, 11 gelegt, die mittels eines aufgeschraubten Flanschrings 12, 13 dichtend am Rohrleitungsabschnitt 1 befestigt sind. Die Schrauben 14 können mit einem Bolzenschweißgerät auf den Auflageflächen 6, 7 festgeschweißt sein, wobei die Anpressung der Scheiben 10, 11 über die Flanschringe 12, 13 durch Schraubenmutter 15 erfolgt.

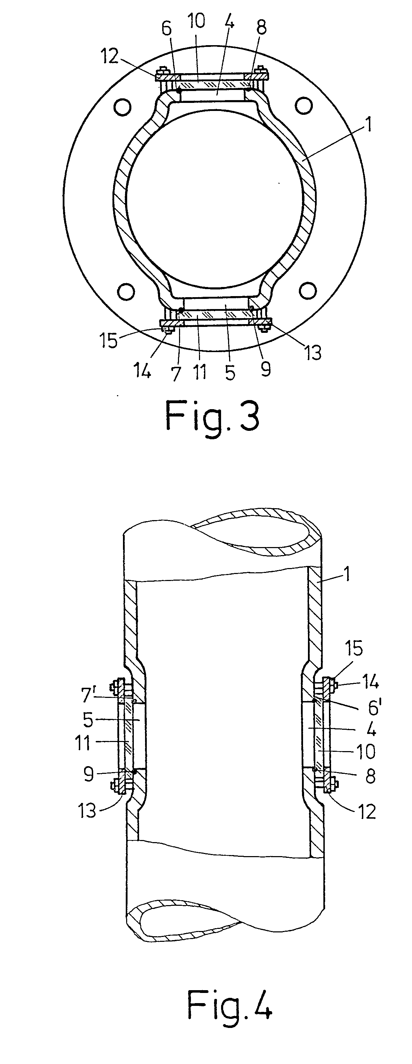

Das in Fig. 4 dargestellte Ausführungsbeispiel unterscheidet

- 7 -

0024285

sich von dem in den Fig. 1 bis 3 dargestellten dadurch, daß die Auflageflächen 6', 7' radial nach innen eingedrückt sind. Hierdurch werden Toträume mit Sicherheit vermieden und außerdem die äußeren Baumaße verringert, da die Scheiben 10, 11 radial weiter innen liegen als bei dem in den Fig. 1 bis 3 dargestellten Ausführungsbeispiel.

# COHAUSZ & FLORACK

PATENTANWALTSBÜRO

SCHUMANNSTR. 97 · D-4000 DÜSSELDORF

Telefon: (02 11) 68 33 46          Telex: 0858 6513 cop d

PATENTANWALTE:

Dipl.-Ing. W. COHAUSZ   ·   Dipl.-Ing. R. KNAUF   ·   Dipl.-Ing. H. B. COHAUSZ   ·   Dipl.-Ing. D. H. WERNER

0024285

18.6.1980

Ansprüche:

1. Schauglas-Armatur, bestehend aus einem Rohrabschnitt, dessen an diametral gegenüberliegenden Seiten seines Mantels vorgesehene Öffnungen durch angeflanschte durchsichtige Scheiben dichtend überdeckt sind, d a d u r c h  g e k e n n z e i c h n e t , daß der Rohrmantel (1) einstückig angeformte plane Auflageflächen (6, 6'; 7, 7') für die Scheiben (10, 11) im Bereich um die Öffnungen (4, 5) aufweist.

2. Schauglas-Armatur nach Anspruch 1, g e k e n n z e i c h - n e t   d u r c h  möglichst nah an oder in der Tangentialebene des Rohrmantels (1) liegende plane Auflageflächen (6, 6'; 7, 7').

33 306 EU

W/Ka

0024285

Fig.1

Fig.2

0024285

Fig. 3

Fig. 4

Europäisches Patentamt

**EUROPÄISCHER RECHERCHENBERICHT**

0024285

Nummer der Anmeldung

EP 80 10 3418.2

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | DE - U - 7 100 720 (W.A. BACHOFEN)<br>* Fig. 1, 2 *<br>-- | 1,2 | F 17 D 3/00 |
| | US - A - 2 681 034 (J.V. MANNION)<br>* Fig. 2 *<br>-- | 1,2 | |
| | GB - A - 909 527 (ICI)<br>* Fig. 1, 2 *<br>-- | 1 | |
| | DE - U - 1 817 966 (P. VERPOORT)<br>* Fig. 1 *<br>-- | 1 | RECHERCHIERTE SACHGEBIETE (Int. Cl.3)<br><br>F 16 L 55/00<br>F 17 D 3/00<br>F 17 D 5/00 |
| A | DE - U - 7 136 835 (ROSISTA)<br>-- | | |
| A | US - A - 2 687 108 (S.J. WALKER)<br>---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort<br>Berlin | Abschlußdatum der Recherche<br>07-11-1980 | Prüfer<br>SCHLABBACH |
|---|---|---|

EPA form 1503.1 06.78